# EUROPÄISCHE PATENTSCHRIFT

(11) **EP 2 139 940 B1**
(45) Veröffentlichungstag und Bekanntmachung des Hinweises auf die Patenterteilung: **30.07.2014**
(21) Anmeldenummer: 08717828.1
(22) Anmeldetag: 14.03.2008
(51) Int. Cl.: C08G 63/02, C08G 63/06, C08G 63/20

(54) **HYPERVERZWEIGTE POLYESTER**
HYPERBRANCHED POLYESTERS
POLYESTERS HYPERRAMIFIÉS

(30) Priorität: 22.03.2007 EP 07104693
(43) Veröffentlichungstag der Anmeldung: 06.01.2010
(73) Patentinhaber: BASF SE, 67056 Ludwigshafen (DE)
(72) Erfinder: SCHÖNFELDER, Daniel, 68161 Mannheim (DE); BRUCHMANN, Bernd, 67251 Freinsheim (DE); FEUERHAKE, Robert, 68163 Mannheim (DE); HÄHNLE, Hans-Joachim, 67435 Neustadt (DE); PAKUSCH, Joachim, 67346 Speyer (DE)
(86) Internationale Anmeldenummer: PCT/EP2008/053086
(87) Internationale Veröffentlichungsnummer: WO 2008/113759

(56) Entgegenhaltungen:
- EP-A- 1 582 548
- WO-A-96/12754
- WO-A-03/054204
- US-A- 3 669 939

## Beschreibung

Die vorliegende Erfindung betrifft neue hyperverzweigte Polyester auf Basis von Oligohydroxycarbonsäuren mit definierter Funktionalität.

Hyperverzweigte Polyester auf Basis von Dimethylolpropionsäure sind beispielsweise aus EP 630389 B1, WO 00/222700 oder EP 1582548 A bekannt.

Nachteilig an diesen hyperverzweigten Polyestern ist jedoch, daß sie unter relativ unbestimmten Reaktionsbedingungen hergestellt werden, so daß sie ungleichmäßige Funktionalitäten aufweisen.

Perfekt dendrimere Polyester, die Dimethylolpropionsäureeinheiten enthalten, sind ebenfalls bekannt, beispielsweise aus E. Malmström et al., Macromolecules 2004, 37(2), 322-329.

Nachteilig an diesen Verbindungen ist, daß in die Synthese nicht Dimethylolpropionsäure eingesetzt werden kann, sondern, um die hohen Selektivitäten zu erzielen, mit einem Acetonid als Schutzgruppe versehene Dimethylolpropionsäure.

Somit erfordert eine derartige Synthese einerseits die nicht-wohlfeile Acetonidgeschützte Dimethylolpropionsäure als Ausgangskomponente und andererseits Reaktionsschritte zum Entfernen dieser Schutzgruppen.

Diese Schrift beschreibt auch den Bedarf an solchen hyperverzweigten Polyestern, die einpolymerisierbare Gruppen, wie beispielsweise Acrylat- oder Methacrylatgruppen enthalten, um sie beispielsweise in der Herstellung von Polymeren einzusetzen. Dabei ist es wichtig, daß derartige Verbindungen genau eine radikalisch polymerisierbare Gruppe aufweisen, da Verbindungen mit zwei oder mehr radikalisch polymerisierbaren Gruppen zu einer Vernetzung der Polymere führen würden.

Es besteht daher Bedarf an einfach zu synthetisierenden hyperverzweigten Polyestern, die bezüglich radikalisch polymerisierbarer Gruppen im wesentlichen monofunktional sind.

Aufgabe der vorliegenden Erfindung war es, hyperverzweigte Polyester mit regelmäßiger Struktur zur Verfügung zu stellen, die ausgehend von einfachen Synthesebausteinen unter Verzicht von Schutzgruppenoperationen hergestellt werden können, die im wesentlichen monofunktional bezüglich Carboxygruppen sind und leicht in beispielsweise radikalisch polymerisierbare ebenfalls im wesentlichen monofunktionale Verbindungen überführbar sind.

Die Aufgabe wurde gelöst durch hyperverzweigte Polyester mit einem gewichtsmittleren Molekulargewicht Mw zwischen 500 und 300.000 g/mol, erhältlich durch Umsetzung mindestens einer Oligohydroxycarbonsäure, in Gegenwart mindestens eines Katalysators, ausgewählt ist aus der Gruppe bestehend aus Säuren, Metallchelaten, Metallalkoholaten, Metallalkanoaten und metallorganischen Verbindungen; und in Gegenwart mindestens eines unter den Reaktionsbedingungen inerten Lösungsmittels, dadurch gekennzeichnet, daß man die Temperatur während der Reaktion auf nicht mehr als 120 °C einstellt, die mittlere Funktionalität an Carboxyfunktionen pro Molekül mehr als 0,8 und weniger als 1,05 beträgt und die mittlere Funktionalität an Ethergruppen -CH₂-O-CH₂- weniger als 0,20 beträgt.

Unter hyperverzweigten Polyestern werden im Rahmen dieser Erfindung unvernetzte Makromoleküle mit Hydroxy- und Carboxygruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen, verzweigten Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc., 1952, 74, 2718 und H. Frey et al., Chem. Eur. J., 2000, 6 (14), 2499.

Unter "hoch-" und "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, geteilt durch die Summe aus der mittleren Anzahl der dendritischen Verknüpfungen, der mittleren Anzahl der linearen Verknüpfungen und der mittleren Anzahl der Endgruppen, multipliziert mit 100, 10 bis 99,9 %, bevorzugt 20 bis 99 %, besonders bevorzugt 20 bis 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Es stellt ein wichtiges Merkmal der Polyester dar, daß sie unvernetzt sind. "Unvernetzt" im Rahmen dieser Schrift bedeutet, daß ein Vernetzungsgrad von weniger als 15 Gew%, bevorzugt von weniger als 10 Gew%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also ausgewählt aus der Gruppe bestehend aus Tetrahydrofuran, Dimethylacetamid und Hexafluorisopropanol, je nachdem, in welchem Lösungsmittel das Polymer besser löslich ist, in einer Soxhlet-Apparatur und, nach Trocknung des Rückstandes bis zur Gewichtskonstanz, Wägung des verbliebenen Rückstandes.

Die Aufbaureaktion dieser Art von Polyester erfolgt durch Reaktion der Carboxygruppe der Oligohydroxycarbonsäure mit einer der Hydroxygruppen. Bei einer idealen Aufbaureaktion durch Veresterung von n Molekülen einer bezüglich Hydroxygruppen bifunktionellen Oligohydroxycarbonsäure würde dies zu einem hyperverzweigten Polyester mit (n+1) Hydroxygruppen und genau einer Carboxygruppe führen. Dieser ideale Aufbau wird in der Realität jedoch gestört durch Veretherungsreaktionen der Hydroxygruppen und durch intramolekulare Veresterung (Lactonbildung).

Die Veretherungsreaktion führt dazu, daß weniger Hydroxygruppen als ideal im Produkt enthalten sind. Intramolekular gebildete Ethergruppen haben keine Auswirkungen auf die Anzahl der Carboxygruppen pro Molekül. Hingegen wird für jede intermolekular gebildete Ethergruppe eine weitere freie Carboxyfunktion im hyperverzweigten Polyester gebildet. Dies widerspricht jedoch der aufgabengemäßen Forderung nach monofunktionellen und gleichmäßig aufgebauten Produkten. Es gilt also die Veretherungsreaktion zu unterbinden oder zumindest zurückzudrängen.

Die Lactonbildung erfolgt durch intramolekulare Reaktion einer Carboxygruppe mit einer Hydroxygruppe und führt neben einem unregelmäßigen Aufbau zu einer Verringerung der freien Carboxygruppen im Produkt. Diese Reaktion senkt die mittlere Funktionalität an Carboxygruppen im Produkt. Dies widerspricht jedoch der aufgabengemäßen Forderung nach monofunktionellen und gleichmäßig aufgebauten Produkten. Es gilt also, die Lactonbildung zu unterbinden oder zumindest zurückzudrängen. Da die Lactonbildung die Funktionalität an Carboxygruppen im Molekül absenkt, wohingegen die intermolekulare Veretherung sie erhöht, ist die Lactonbildung eher zu tolerieren als eine Reaktion, die zu einer Erhöhung der Carboxyfunktionalität führt. Bevorzugt sei jedoch auch die Lactonbildung so gering wie möglich.

Das gewichtsmittlere Molgewicht M_{w} (gelpermeationschromatographisch unter Verwendung von Polymethylmethacrylatstandards bestimmt) der erfindungsgemäßen hyperverzweigten Polyester liegt zumeist zwischen 500 und 300.000, bevorzugt von 600 bis 200.000 g/mol, das zahlenmittlere Molgewicht Mₙ zwischen 400 und 50.000, bevorzugt zwischen 500 und 30.000 g/mol.

Die Polydispersität beträgt in der Regel von 1,1 bis 30, bevorzugt von 1,2 bis 20.

Die erfindungsgemäßen hochfunktionellen, hoch- oder hyperverzweigten Polyester sind bei Raumtemperatur (23 °C) flüssig oder fest und weisen in der Regel eine Glasübergangstemperatur von -50 bis 120 °C, bevorzugt von -40 bis 100 °C und besonders bevorzugt von -30 bis 80 °C auf. Solche hochfunktionellen, hoch- oder hyperverzweigten Polyester, die aus aromatischen Oligohydroxycarbonsäuren aufgebaut sind, können eine Glasübergangstemperatur bis zu 180 °C aufweisen.

Die Glasübergangstemperatur T_{g} wird mit der DSC-Methode (Differential Scanning Calorimetry) gemäß ASTM 3418/82 bestimmt, die Aufheizrate beträgt bevorzugt 10 °C/min.

Die OH-Zaht gemäß DIN 53240, Teil 2 der hyperverzweigten Polyester beträgt in der Regel von 1 bis 800 mg KOH/g, bevorzugt von 50 bis 800 mg KOH/g, besonders bevorzugt von 80 bis 700 mg KOH/g.

Erfindungsgemäß wesentlich ist, daß die erfindungsgemäßen hyperverzweigten Polyester eine mittlere Funktionalität an Carboxyfunktionen (-COOH) von mehr als 0,8, besonders bevorzugt mehr als 0,9 und ganz besonders bevorzugt mehr als 0,95 und weniger als 1,05 aufweisen.

Mit der mittleren Funktionalität ist die durchschnittliche Anzahl der betreffenden funktionellen Gruppen pro Molekül gemeint.

Unerwünschte Makromoleküle mit unterschiedlichem Gehalt an Carboxygruppen können besonders gut durch massenspektrometrische Methoden, wie z.B. durch MALDI-TOF-Analyse, nachgewiesen werden. So können durch Zugabe von verschiedenen Salzen (z. B. mit einem Kation mit der Molmasse "Kat" aus der Reihe der Li*, Na* oder K*-Salze) bei der Probenvorbereitung vor der MALDI-TOF-Messung die Signale der Carboxygruppen-haltigen Makromoleküle aus den Signalreihen der übrigen Komponenten ohne Carboxygruppen separiert werden. Makromoleküle mit Carboxygruppen können neben den gewöhnlichen Signalen mit der Masse (M + Kat)⁺ aufgrund von Proton-Kation-Austausch für jede enthaltene Carboxygruppe zusätzliche Signale zeigen, die einen um die Masse des um eine Masseneinheit verringerten Kations (Kat-1) erhöhten Massenwert aufweisen. Somit ergibt sich für jedes Makromolekül je nach Carboxygruppen-Funktionalität ein typisches massenspektrometrisches Signalmuster im Massenabstand von (Kat-1).

Die drei folgenden Beispiele sollen diesen Sachverhalt veranschaulichen: im Fall von bzgl, der Carboxygruppen monofunktionellen Makromolekülen treten im MALDI-TOF nur das kationisierte Molekülion (M + Kat)⁺ sowie das durch Proton-Kation-Austausch hervorgegangene erhöhte Signal bei (M + (Kat - 1) + Kat)⁺ auf. Makromoleküle mit zwei Carboxygruppen pro Molekül, zeigen neben diesen beiden Signalreihen zusätzlich noch eine dritte Reihe, die durch doppelten Proton-Kation-Austausch hervorgeht und eine um 2 * (Kat - 1) erhöhte Masse hat: (M + 2 * (Kat - 1) + Kat)⁺. Makromoleküle ohne Carboxygruppen würden hingegen nur das Hauptsignal bei (M + Kat)⁺ zeigen, da ohne freie Carboxygruppe kein Proton-Kation-Austausch möglich ist.

Ein weiteres Merkmal der erfindungsgemäßen hyperverzweigten Polyester ist, daß sie eine geringe mittlere Funktionalität an Ethergruppen -CH₂-O-CH₂- aufweisen. Diese beträgt häufig weniger als 0,2, bevorzugt weniger als 0,15, besonders bevorzugt weniger als 0,10, ganz besonders bevorzugt weniger als 0,06 und insbesondere weniger als 0,04. Derartige Ethergruppen entstehen durch inter- oder intramolekulare Reaktion von Hydroxymethylgruppen von Einheiten der Oligohydroxycarbonsäure miteinander. Dies hat insbesondere zur Folge, daß für jede intermolekulare Ethergruppe eine irreguläre Carboxygruppe gebildet wird.

Der Gehalt an Ethergruppen -CH₂-O-CH₂- im Produkt kann bestimmt werden durch ¹³C-NMR-Spektroskopie bei 100 MHz in d₆-DMSO. So sind die CH₂-Gruppen der Ethergruppen -CH₂-O-CH₂- im ¹³C-NMR im Vergleich zu den CH₂-Gruppen der Estergruppen -CH₂-O-OC- tieffeld-verschoben. Beispielsweise erscheinen die CH₂-Gruppen der Ethergruppen im hyperverzweigten Polyester der Dimethylolbuttersäure bei um etwa 2 - 10 ppm tieferem Feld als die CH₂-Gruppen der Estergruppen, die bei ca. 58 - 63 ppm auftreten.

Ein weiteres Merkmal der erfindungsgemäßen hyperverzweigten Polyester ist, daß sie eine geringe Funktionalität an Lactongruppen aufweisen. Diese beträgt in der Regel weniger als 0,10, bevorzugt weniger als 0,08, besonders bevorzugt weniger als 0,06, ganz besonders bevorzugt weniger als 0,04 und insbesondere weniger als 0,02. Lactone entstehen durch intramolekulare Reaktion von Hydroxymethylgruppen mit bereits veresterten oder freien Carboxygruppen. Die Reaktion mit freien Carboxygruppen hat insbesondere zur Folge, daß für jedes Lacton eine reguläre Carboxygruppe abgebaut wird. Reagieren beispielsweise zwei Oligohydroxycarbonsäureeinheiten miteinander, so bildet sich daraus ein carboxygruppenfreies, dimeres Ringsystem. Bei der Reaktion entsprechend größerer Polyester bilden sich carboxygruppenfreie makrocyclische Lactone.

Der Gehalt an Lactonen im Produkt kann beispielsweise bestimmt werden durch zweidimensionale NMR-Spektroskopie durch transannulare Wechselwirkungen der Wasserstoffatome.

Besonders gut können cyclische Komponenten des hyperverzweigten Polymers ebenfalls durch massenspektrometrische Methoden, wie z.B. durch MALDI-TOF-Analyse, nachgewiesen werden. So weisen hyperverzweigte Polymere, die einen Cyclus pro Molekül - also eine intramolekulare Etherbindung oder eine intramolekulare Esterbindung (Lacton) enthalten, ein im Vergleich zum Hauptsignal um 18 Masseneinheiten zu niedrigeren Massenwerten verschobenes Signal auf, da sie im Vergleich zum cyclenfreien Hauptsignal durch Abspaltung eines zusätzlichen Wassermoleküls pro Makromolekül hervorgehen. Makromoleküle mit n Cyclen pro Molekül zeigen folglich ein Signal, das im Vergleich zum Hauptsignal um n * 18 Masseneinheiten zu niedrigeren Massenwerten verschoben ist.

Die Oligohydroxycarbonsäuren weisen neben genau einer Carboxyfunktion mindestens zwei Hydroxyfunktionen auf, beispielsweise zwei bis fünf, bevorzugt zwei bis vier, besonders bevorzugt zwei bis drei und ganz besonders bevorzugt genau zwei.

Die Oligohydroxycarbonsäuren können aromatische Gruppen enthalten oder aliphatisch sein, bevorzugt sind sie aliphatisch.

Die Hydroxygruppen können bevorzugt in Form von Hydroxymethylgruppen (-CH₂-OH) vorliegen.

Ein Beispiel für Verbindungen mit genau einer Carboxygruppe, die in Position 2 zur Carboxygruppe mehr als zwei Hydroxymethylgruppen aufweisen, ist 2,2,2-Tris(hydroxymethyl)essigsäure. Solche Oligohydroxycarbonsäuren, die Hydroxygruppen in anderer Form als Hydroxymethylgruppen enthalten, ist beispielsweise 2,3-Dihydroxypropionsäure. Beispiele für Verbindungen mit genau einer Carboxygruppe, die mehr als zwei Hydroxygruppen aufweisen, sind Zuckersäuren wie Gluconsäure, Glucarsäure, Glucuronsäure, Galacturonsäure oder Schleimsäure (Galactarsäure)

Denkbar und bevorzugt ist der Einsatz von aromatischen Dihydroxycarbonsäuren, wie 2,4-, 2,6- und bevorzugt 3,5-Dihydroxybenzoesäure oder 4,4-Bis(4-hydroxyphenyl)valeriansäure.

Besonders bevorzugte Oligohydroxycarbonsäuren sind 2,2-Bis(hydroxymethyl)alkancarbonsäuren.

Erfindungsgemäß einsetzbare 2,2-Bis(hydroxymethyl)alkancarbonsäuren sind beispielsweise solche mit fünf bis zwölf Kohlenstoffatomen, bevorzugt fünf bis sieben, besonders bevorzugt sechs Kohlenstoffatomen, wie beispielsweise 2,2-Bis(hydroxymethyl)propionsäure (Dimethylolpropionsäure), 2,2-Bis(hydroxymethyl)buttersäure (Dimethylolbuttersäure) und 2,2-Bis(hydroxymethyl)valeriansäure, bevorzugt 2,2-Bis(hydroxymethyl)propionsäure (Dimethylolpropionsäure) oder 2,2-Bis(hydroxymethyl)buttersäure (Dimethylolbuttersäure) und besonders bevorzugt 2,2-Bis(hydroxymethyl)buttersäure (Dimethylolbuttersäure).

Die Oligohydroxycarbonsäuren können als Salze, beispielsweise als Ammonium oder Alkalimetallsalze, oder bevorzugt als freie Säuren eingesetzt werden.

In einer bevorzugten Ausführungsform wird die erfindungsgemäße Umsetzung in Gegenwart von nicht mehr als 25 mol% (bezogen auf die Menge an Oligohydroxycarbonsäure), bevorzugt von nicht mehr als 10 mol%, besonders bevorzugt von nicht mehr als 5 mol% und ganz besonders bevorzugt in Abwesenheit von anderen Estern der Oligohydroxycarbonsäure durchgeführt als solche Ester der Oligohydroxycarbonsäure mit sich selbst. Insbesondere ist die Anwesenheit solcher Ester von Oligohydroxycarbonsäure ausgeschlossen, die radikalisch polymerisierbare Gruppen tragen. Dies hätte den Nachteil, daß die polymerisationsempfindlichen radikalisch polymerisierbaren Gruppen während der Veresterungsreaktion den Reaktionsbedingungen der Veresterung ausgesetzt wären.

In einer weiteren bevorzugten Ausführungsform wird die erfindungsgemäße Umsetzung in Abwesenheit von Derivaten der Oligohydroxycarbonsäure durchgeführt, in denen die Hydroxygruppen mit dem Fachmann bekannten Schutzgruppen versehen sind, insbesondere in Abwesenheit von 5-alkylsubstituierten 1,3-Dioxan-5-carbonsäuren durchgeführt. Bei diesen handelt es sich um Umsetzungsprodukte der Oligohydroxycarbonsäure mit Aldehyden oder Ketonen, beispielsweise Acetonide.

Dabei können diese 5-alkylsubstituierten 1,3-Dioxan-5-carbonsäuren in Position 2 mono-, di- oder unsubstituiert sein, wobei es sich bei der Alkylgruppe in Position 5 bevorzugt um eine Methyl oder besonders bevorzugt um eine Ethylgruppe handelt.

Weitere geschützte Derivate der Oligohydroxycarbonsäuren, in deren Abwesenheit die erfindungsgemäße Reaktion bevorzugt ausgeführt wird, sind Umsetzungsprodukte der Oligohydroxycarbonsäure, in denen die Hydroxygruppen über Carbonateinheiten verbunden sind oder mit Silylgruppen geschützt sind.

In einer weiteren bevorzugten Ausführungsform wird die erfindungsgemäße Umsetzung in Abwesenheit von ausschließlich Hydroxygruppen enthaltenden Verbindungen durchgeführt. Derartige ausschließlich Hydroxygruppen enthaltende Verbindungen sind beispielsweise Mono-, Di- oder Polyalkohole, aber auch deren Ester mit Oligohydroxycarbonsäuren. Nachteilig an der Anwesenheit derartiger Alkohole ist, daß diese Verbindungen mit den Carboxygruppen reagieren können und damit den erfindungsgemäß erwünschten Gehalt an Carboxygruppen senken würden.

Zur Herstellung der erfindungsgemäßen hyperverzweigten Polyester ist es entscheidend, die Temperatur während der Reaktion nicht zu hoch zu wählen, da dadurch die Veretherungsreaktion und/oder die Lactonbildung gefördert wird.

in der Regel sollte die Temperatur während der Reaktion nicht mehr als 120 °C, bevorzugt nicht mehr als 110 °C, besonders bevorzugt nicht mehr als 100 °C und ganz besonders bevorzugt nicht mehr als 90 °C betragen.

Selbstverständlich ist eine Mindesttemperatur erforderlich, um die Reaktion in sinnvoller Geschwindigkeit ablaufen zu lassen. In der Regel sollte die Temperatur während der Reaktion mindestens 50 °C, bevorzugt mindestens 60 °C und besonders bevorzugt mindestens 70 °C betragen.

Die Dauer der Reaktion ist dagegen in der Regel von untergeordnetem Einfluß und ist auch von der gewählten Temperatur abhängig. Je höher die Temperatur, desto kürzer sollte die Reaktionsdauer gewählt werden. Die Dauer der Reaktion sollte 48 Stunden nicht überschreiten, bevorzugt nicht mehr als 36 Stunden, besonders bevorzugt nicht mehr als 24 Stunden. In der Regel sind jedoch mindestens 2 Stunden, bevorzugt mindestens 4 Stunden, besonders bevorzugt mindestens 6 Stunden, ganz besonders bevorzugt mindestens 8 Stunden und insbesondere mindestens 12 Stunden erforderlich.

Entscheidend ist, daß in der Reaktion ein ausreichender Umsatz der Oligohydroxycarbonsäure gewährleistet ist. Der Umsatz bezogen auf umgesetzte Carboxygruppen sollte mindestens 50 %, bevorzugt mindestens 66 %, besonders bevorzugt mindestens 75 %, ganz besonders bevorzugt mindestens 80 %, insbesondere mindestens 85 %, speziell mindestens 90 % und sogar mindestens 95 % betragen. Es können auch noch höhere Umsätze, wie mindestens 97 %, 98 % oder gar 99 % sinnvoll sein.

Der Umsatz kann beispielsweise verfolgt werden, indem man die Bildung des während der Veresterungsreaktion freigesetzten Wassers verfolgt, das beispielsweise abdestilliert, bevorzugt azeotrop abdestilliert werden kann. Es ist aber auch denkbar, die Umsetzung bis zu einem signifikanten Viskositätsanstieg des Reaktionsgemischs zu führen.

Dazu wird die Reaktion in mindestens einem, bevorzugt genau einem Lösungsmittel durchgeführt. Das Lösungsmittel sollte bevorzugt unter den Reaktionsbedingungen inert sein, d.h. nicht mit dem Edukt, Zwischenprodukten oder dem Produkt reagieren. Als inert gilt ein Lösungsmittel, wenn es unter den Reaktionsbedingungen zu nicht mehr als 5 Gew%, bezogen auf die Ausgangsmenge, in beliebiger Weise, beispielsweise durch Reaktion mit Edukt, Zwischenprodukt oder Produkt oder durch thermische Zersetzung, abgebaut wird, bevorzugt zu nicht mehr als 3, besonders bevorzugt zu nicht mehr als 2, ganz besonders bevorzugt zu nicht mehr als 1, insbesondere zu nicht mehr als 0,5 und insbesondere zu nicht mehr als 0,2 Gew%.

Infolgedessen ist die Verwendung von Alkoholen oder carbonylgruppenhaltigen Verbindungen als Lösungsmittel weniger bevorzugt. Alkohole sind beispielsweise 1 bis 12 Kohlenstoffatome aufweisende, gegebenenfalls substituierte Alkanole, wie beispielsweise Methanol, Ethanol, iso-Propanol, n-Propanol, n-Butanol, iso-Butanol, sek-Butanol, tert-Butanol, Ethylenglykolmonomethylether, Ethylenglykolmonoethylether, n-Hexanol, n-Heptanol, n-Octanol, n-Decanol, n-Dodecanol (Laurylalkohol), 2-Ethylhexanol, Cyclopentanol oder Cyclohexanol. Carbonylgruppenhaltige Verbindungen sind beispielsweise Aldehyde oder besonders Ketone, beispielsweise Aceton, Ethylmethylketon, Diethylketon, iso-Butylmethylketon, Cyclopentanon oder Cyclohecxanon.

Denkbar, wenn auch weniger bevorzugt, ist der Einsatz von Carbonsäureestern als Lösungsmittel, beispielsweise n-Butylacetat, Ethylacetat, 1-Methoxypropylacetat-2 und 2-Methoxyethylacetat.

Das eingesetzte Lösungsmittel sollte eine ausreichende Löslichkeit für die Oligohydroxycarbonsäure aufweisen. Dafür sind beispielsweise solche Lösungsmittel bevorzugt, die ausreichend polar sind und eine relative Dielektrizitätskonstante von 5 bis 80, bevorzugt 7 bis 50 und besonders bevorzugt 7,4 bis 40 aufweisen.

Beispiele dafür sind halogenierte Kohlenwasserstoffe, bevorzugt chlorierte Kohlenwasserstoffe, beispielsweise chlorierte Aromaten oder Aliphaten. Bevorzugt sind Chlorbenzol, Chlortoluol, o-Dichlorbenzol, Methylenchlorid, Chloroform, 1,2-Dichlorethan, 1,1-Dichlorethan oder 1,1,1-Trichlorethan.

Denkbar sind aber auch cyclische oder acyclische Ether, beispielsweise Tetrahydrofuran, Dioxan, tert. Butylmethylether oder tert. Butylethylether.

Dem Siedepunkt des Lösungsmittels sind nach oben prinzipiell keine Grenzen gesetzt.

Um eine einfache destillative Abtrennung des eingesetzten Lösungsmittels nach beendeter Reaktion zu ermöglichen ist es bevorzugt, solche Lösungsmittel mit einem Siedepunkt bei Normaldruck von nicht mehr als 150 °C einzusetzen.

Weiterhin kann es vorteilhaft sein, Lösungsmittel mit einem Siedepunkt bei Normaldruck einzusetzen, der oberhalb der Reaktionstemperatur liegt oder dieser entspricht. In diesem Fall kann die Reaktion einfach bei Normaldruck oder normalem Druck durchgeführt werden und das Lösungsmittel nach Beendigung der Reaktion einfach abdestilliert werden.

Es ist natürlich auch denkbar, Lösungsmittel mit einem niedrigeren Siedepunkt einzusetzen. In diesem Fall müßte die Reaktion unter erhöhtem Druck durchgeführt werden, um die erforderliche Mindesttemperatur zu erreichen.

Ferner wird der Reaktion mindestens ein Katalysator zugesetzt, der die Veresterungsreaktion beschleunigt. Derartige Katalysatoren sind dem Fachmann an sich bekannt.

Der Katalysator ist ausgewählt aus der Gruppe bestehend aus Säuren, Metallchelate, Metallalkoholate, Metallalkanoate und metallorganischen Verbindungen.

Säuren sind bevorzugt solche mit einem pKs-Wert von kleiner als 4,75, besonders bevorzugt kleiner als 4,0 und insbesondere bevorzugt kleiner als 3,0.

Als saurer Veresterungskatalysator wird bevorzugt para-Toluolsulfonsäure eingesetzt. Andere brauchbare saure Veresterungskatalysatoren sind organische Sulfonsäuren, z. B. Methansulfonsäure, Benzolsulfonsäure, Dodecylbenzolsulfonsäure, Camphersulfonsäure, Cyclododecansulfonsäure und/oder Schwefelsäure. Auch entsprechende Mischungen können verwendet werden. Der Gehalt an Veresterungskatalysator, bezogen auf das darin enthaltene Reaktionsgemisch, beträgt zweckmäßiger Weise 0,1 bis 10 Gew.-%, bevorzugt 0,1 bis 6 Gew.-%. Carbonsäuren sind prinzipiell ebenfalls als Katalysator denkbar, sofern sie eine ausreichende Säurestärke aufweisen. Da Carbonsäuren aber selbst reaktiv sind und somit zusätzlich mit umgesetzt werden können, sind Carbonsäuren weniger bevorzugte Katalysatoren.

Metallverbindungen sind Alkanolate, Alkanoate, Chelate oder metallorganische Verbindungen der Metalle der Gruppen IIIA bis VIIIA oder IB bis VB im Periodensystem der Elemente.

Bevorzugte Metalle sind Bor, Aluminium, Zinn, Zink, Titan, Antimon, Zirkon oder Bismut.

Chelate sind dabei cyclische Verbindungen, bei denen Metalle und Gruppierungen mit einsamen Elektronenpaaren einen Ring bilden. Bevorzugter Chelatbildner ist Acetylacetonat. Ein Beispiel für einen solchen Katalysator ist Zirkonacetylacetonat.

Alkanolate sind beispielsweise C₁-C₁₀-Alkanolate, bevorzugt C₁-C₄-Alkanolate, besonders bevorzugt sind Methanolat, Ethanolat, iso-Propanolat und n-Butanolat, ganz besonders bevorzugt sind Methanolat und Ethanolat und insbesondere Methanolat.

Alkanoate sind beispielsweise C₁-C₂₀-Alkanoate, bevorzugt sind C₁-C₄-Alkanoate, besonders bevorzugt ist Acetat.

Metallorganische Verbindungen sind solche mit einer direkten Metall-Kohlenstoff-Bindung.

Bevorzugte Metallverbindungen als Katalysatoren sind Titantetrabutanolat, Titantetraisopropanolat, Zirkontetrabutanolat, Zinn(II)-n-octanoat. Zinn-(II)-2-ethylhexanoat, Zinn-(II)-laurat, Dibutyl-zinnoxid, Dibutylzinndichlorid, Dibutylzinndiacetat, Dibutylzinndilaurat, Dibutylzinndimaleat, Dioctylzinndiacetat, Antimontriethanolat oder Boronsäurederivate, beispielsweise Pyridinboronsäure.

Es kann eine bevorzugte Ausführungsform darstellen, die erfindungsgemäßen hyperverzweigten Polyester mit monofunktionellen Säuren, beispielsweise Carbonsäuren oder Sulfonsäuren, bevorzugt Carbonsäuren zu modifizieren. Diese Modifizierung kann nach Abschluß der Umsetzung der Oligohydroxycarbonsäure oder bevorzugt während der Umsetzung der Oligohydroxycarbonsäure erfolgen.

Weiterhin lassen sich Gemische von zwei oder mehreren der vorgenannten Säuren einsetzen. Die Säuren können entweder als solche oder in Form von Derivaten verwendet werden. Solche Derivate sind insbesondere
- die Anhydride der genannten Säuren, und zwar in monomerer oder auch polymerer Form;
- die Ester der genannten Säuren, z.B.
   - Mono- oder Dialkylester, bevorzugt C₁ bis C₄-Alkylester, besonders bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
   - Mono- und Divinylester sowie
   - gemischte Ester, bevorzugt Methyl ethylester.

Beispielsweise können die hyperverzweigten Polymere mit Alkyl- oder Alkenylcarbonsäuren, wie zum Beispiel Octansäure, Nonansäure, Decansäure. Dodecansäure, Hexadecansäure, Stearinsäure, Ölsäure, Linolsäure, Linolensäure oder deren Li-, Na-, K-. Cs-, Ca- oder Ammoniumsalzen, mit Alkylsulfonsäuren, zum Beispiel Octansulfonsäure, Dodecansulfonsäure, Stearylsulfonsäure oder Oleylsulfonsäure, oder deren Li-, Na, K-, Cs-, Ca- oder Ammoniumsalzen, mit Camphersulfonsäure, Cyclododecylsulfonsäure, p-Toluolsulfonsäure, Benzolsulfonsäure, 4-Hexylbenzolsulfonat, 4-Octylbenzolsulfonat, 4-Decylbenzolsulfonat oder 4-Dodecylbenzolsulfonat oder deren Li-, Na-, K-, Cs-, Ca- oder Ammoniumsalzen, mit Alkylsulfaten, zum Beispiel mit n-Alkylsulfaten oder sekundären Alkylsulfaten umgesetzt werden.

Die Alkyl-, Alkenyl-, Cycloalkyl-, oder Arylreste können dabei bis zu 20 Kohlenstoffatome aufweisen, bevorzugt 6 bis 20, besonders bevorzugt 7 bis 20.

Denkbar ist aber auch die Umsetzung mit Säuren, die Oxyalkylengruppen enthalten. Bevorzugt handelt es sich dabei um solche Säuren der Formel

R²-[-CH₂-CH₂-O]_{y}-R³-COOH

worin
R² eine 1 bis 8 Kohlenstoffatome, bevorzugt 1 bis 4 Kohlenstoffatome aufweisende Alkylgruppe,
y gleich 0 oder eine positive ganze Zahl von 1 bis 20 und
R³ eine 1 bis 8, bevorzugt 1 bis 4, besonders bevorzugt 1 bis 2 und ganz besonders bevorzugt ein Kohlenstoffatom aufweisende Alkylengruppe ist.

Unter einer 1 bis 8 Kohlenstoffatome aufweisenden Alkylgruppe wird dabei Methyl, Ethyl, iso-Propyl, n-Propyl, n-Butyl, iso-Butyl, sek-Butyl, tert-Butyl, n-Hexyl, n-Heptyl, n-Octyl und 2-Ethylhexyl verstanden.

Unter einer 1 bis 8 Kohlenstoffatome aufweisenden Alkylengruppe wird Methylen, 1,1-Ethylen, 1,2-Ethylen, 1,2-Propylen, 1,3-Propylen, 1,2-Butylen, 1,3-Butylen, 1,4-Butylen und 1,6-Hexylen verstanden.

Bevorzugt handelt es sich bei R² um Methyl, Ethyl oder n-Butyl, bevorzugt um Methyl oder n-Butyl und besonders bevorzugt um Methyl.

Bevorzugt ist y eine Zahl von 1 bis 10, besonders bevorzugt von 1 bis 5 und ganz besonders bevorzugt 1, 2 oder 3.

Bevorzugt ist R³ Methylen oder 1,2-Ethylen, besonders bevorzugt Methylen.

Von den genannten monofunktionellen Säuren können 0 bis 40 mol%, bevorzugt 0 bis 30 mol%, besonders bevorzugt 0 bis 20 mol%, ganz besonders bevorzugt 0 bis 10 mol% und insbesondere 0 mol% bezogen auf die eingesetzte Oligohydroxycarbonsäure umgesetzt werden.

Eine weitere bevorzugte Ausführungsform kann es darstellen, die erfindungsgemäßen hyperverzweigten Polyester mit Monohydroxycarbonsäuren oder deren Derivate zu modifizieren. Diese Modifizierung kann nach Abschluß der Umsetzung der Oligohydroxycarbonsäure oder bevorzugt während der Umsetzung der Oligohydroxycarbonsäure erfolgen.

Derivate sind dabei wie oben definiert und können zusätzlich und bevorzugt Lactone sein.

Beispiele für Lactone sind dabei gamma-Butyrolacton, gamma-Valerolacton, delta-Valerolacton, gamma -Caprolacton und epsilon-Caprolacton.

Beispiele für Monohydroxycarbonsäuren sind solche der Formel

HO-R⁴-COOH

worin
R⁴ eine 1 bis 8, bevorzugt 2 bis 6, besonders bevorzugt 3 bis 5 und ganz besonders bevorzugt 3 oder 4 Kohlenstoffatome aufweisende Alkylengruppe ist.

Bevorzugt handelt es sich bei R⁴ um eine α,ω-Alkyleneinheit, denkbar, wenn auch weniger bevorzugt sind α,(ω-1)- oder α,(ω-2)-Alkyleneinheiten.

Von den genannten Monohydroxycarbonsäuren können 0 bis 40 mol%, bevorzugt 0 bis 30 mol%, besonders bevorzugt 0 bis 20 mol%, ganz besonders bevorzugt 0 bis 10 mol% und insbesondere 0 mol% bezogen auf die eingesetzte Oligohydroxycarbonsäure umgesetzt werden.

Die so erfindungsgemäß hergestellten monofunktionellen bezüglich der Carbonsäuregruppe hyperverzweigten Polyester werden bevorzugt weiter umgesetzt zu solchen hyperverzweigten Polyestern, in denen die Carboxyfunktion derivatisiert wird mit genau einer radikalisch polymerisierbaren Gruppe.

Radikalisch polymersierbare Gruppen sind beispielsweise Allylgruppen, Vinylethergruppen und bevorzugt Acrylat- und Methacrylatgruppen, wobei letztere in dieser Schrift kurz als (Meth)acrylatgruppen zusammengefaßt werden, sowie an aromatische Systeme konjugierte Doppelbindungen.

Allylgruppen (H₂C=CH-CH₂-) können als solche oder bevorzugt als Allylethergruppen (H₂C=CH-CH₂-O-) vorliegen, denkbar sind aber auch Allylestergruppen (H₂C=CH-CH₂-O-CO-).

Vinylethergruppen (H₂C=CH-O-) können alternativ auch als Vinylestergruppen (H₂C=CH-O-CO-) vorliegen.

An aromatische Systeme konjugierte Doppelbindungen sind beispielsweise solche, wie sie in Styrol, α-Methylstyrol, Zimtsäure oder Zimtsäureestern vorliegen.

Die Derivatisierung erfolgt durch Umsetzung der Carboxygruppe der hyperverzweigten Polyester mit mindestens einer Verbindung, die mindestens eine, bevorzugt genau eine gegenüber Carboxygruppen reaktive Gruppe und genau eine radikalisch polymerisierbare Gruppe, bevorzugt (Meth)acrylatgruppe trägt.

Derartige Verbindungen sind bevorzugt solche der Formel

[RG]ₓ-R¹-Acr,

worin
- x: für eine positive ganze Zahl von mindestens 1, bevorzugt 1 bis 3, besonders bevorzugt 1 bis 2 und ganz besonders bevorzugt genau 1,
- RG: für eine gegenüber gegenüber Carboxygruppen reaktive Gruppe,
- R¹: für einen 1 bis 20 Kohlenstoffatome aufweisenden (x+1)-wertigen organischen Rest, und
- Acr: für radikalisch polymerisierbare Gruppe.
stehen.

R¹ kann dabei bevorzugt C₆-C₁₂-Arylen, C₃-C₁₂-Cycloalkylen, C₁-C₂₀-Alkylen oder durch ein- oder mehrere Sauerstoff- und/oder Schwefelatome und/oder ein oder mehrere substituierte oder unsubstituierte Iminogruppen und/oder durch eine oder mehrere -(CO)-, -O(CO)O-, -(NH)(CO)O-, -O(CO)(NH)-, -O(CO)- oder -(CO)O-Gruppen unterbrochenes C₂-C₂₀-Alkylen bedeuten.

Darin bedeuten
C₃ - C₁₂-Cycloalkylen beispielsweise Cyclopropylen, Cyclopentylen, Cyclohexylen, Cyclooctylen, Cyclododecylen,
C₆-C₁₂-Arylen beispielsweise 1,2-, 1,3- oder 1,4-Phenylen, 2,3-, 2,4-, 2,5- oder 2,6-Toluylen, 1,8-, 1,5- oder 2,6-Naphthylen und
C₁ - C₂₀-Alkylen lineares oder verzweigtes Alkylen, z.B. Methylen, 1,2-Ethylen, 1,2-oder 1,3-Propylen, 1,2-, 1,3- oder 1,4-Butylen, 1,1-Dimethyl-1,2-ethylen oder 1,2-Dimethyl-1,2-ethylen, 1,6-Hexylen, 1,8-Octylen oder 1,10-Decylen.

Die Anzahl der Sauerstoff- und/oder Schwefelatome und/oder Iminogruppen im C₂-C₂₀-Alkylen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, iso-Propylimino, n-Butylimino oder tert-Butylimino sein.

Beispiele für derartige unterbrochene C₂-C₂₀-Alkylen sind 1-Oxa-1,3-propylen, 1,4-Dioxa-1,6-hexylen, 1,4,7-Trioxa-1,9-nonylen, 1-Oxa-1,4-butylen, 1,5-Dioxa-1,8-octylen, 1-Oxa-1,5-pentylen, 1-Oxa-1,7-heptylen, 1,6-Dioxa-1,10-decylen, 1-Oxa-3-methyl-1,3-propylen, 1-Oxa-3-methyl-1,4-butylen, 1-Oxa-3,3-dimethyl-1,4-butylen, 1-Oxa-3,3-dimethyl-1,5-pentylen, 1,4-Dioxa-3,6-dimethyl-1,6-hexylen, 1-Oxa-2-methyl-1,3-propylen, 1,4-Dioxa-2,5-dimethyl-1,6-hexylen, 1-Oxa-1,5-pent-3-enylen, 1-Oxa-1,5-pent-3-inylen, 1,1-, 1,2-, 1,3- oder 1,4-Cyclohexylen, 1,2- oder 1,3-Cyclopentylen, 1,2-, 1,3- oder 1,4-Phenylen, 4,4'-Biphenylen, 1,4-Diaza-1,4-butylen, 1-Aza-1,3-propylen, 1,4,7-Triaza-1,7-heptylen, 1,4-Diaza-1,6-hexylen, 1,4-Diaza-7-oxa-1,7-heptylen, 4,7-Diaza-1-oxa-1,7-heptylen, 4-Aza-1-oxa-1,6-hexylen, 1-Aza-4-oxa-1,4-butylen, 1-Aza-1,3-propylen, 4-Aza-1-oxa-1,4-butylen, 4-Aza-1,7-dioxa-1,7-heptylen, 4-Aza-1-oxa-4-methyl-1,6-hexylen, 4-Aza-1,7-dioxa-4-methyl-1,7-heptylen, 4-Aza-1,7-dioxa-4-(2'-hydroxyethyl)-1,7-heptylen, 4-Aza-1-oxa-(2'-hydroxyethyl)-1,6-hexylen oder 1,4-Piperazinylen.

R¹ steht dabei bevorzugt für Methylen, 1,2-Ethylen, 1,2-Propylen, 1,3-Propylen, 1,4-Butylen, 1,6-Hexylen, 1,8-Octylen oder 1,10-Decylen.

Beispiele für radikalisch polymerisierbare Gruppen Acr sind Allyl-, Methallyl-, Vinylether-, Acryl-, Methacryl- sowie 2-Phenyl-ethen-1-yl- (Styrol-) Gruppen, bevorzugt (Meth)acrylatgruppen und besonders bevorzugt Acrylatgruppen.

Beispiele für gegenüber gegenüber Carboxygruppen reaktive Gruppen RG sind primäre Aminogruppen, sekundäre Aminogruppen, Aziridine, Azetidiniumverbindungen und bevorzugt Epoxygruppen.

Bevorzugt handelt es sich bei diesen Verbindungen um die formalen Umsetzungsprodukte von Epichlorhydrin (1-Chlor-2,3-epoxypropan) mit einer Verbindung, die genau eine radikalisch polymerisierbare Gruppe und mindestens eine, bevorzugt eine bis drei, besonders bevorzugt eine bis zwei und ganz besonders bevorzugt genau eine Säurefunktion enthält.

Solche Verbindungen, die genau eine radikalisch polymerisierbare Gruppe und mindestens eine Säurefunktion enthalten sind beispielsweise Acrylsäure, Methacrylsäure, Ethacrylsäure, α-Chloracrylsäure, Crotonsäure, Maleinsäure, Fumarsäure, Itaconsäure, Citraconsäure, Mesaconsäure, Glutaconsäure, Aconitsäure, Vinylsulfonsäure, Vinylphosphonsäure, Allylsulfonsäure, Sulfoethylacrylat, Sulfoethylmethacrylat, 2- oder 3-Sulfopropylacrylat, 2- oder 3-Sulfopropylmethacrylat, 2-Hydroxy-3-acryloxypropylsulfonsäure, 2-Hydroxy-3-methacryl-oxypropylsulfonsäure, Allylphosphonsäure, Styrolsulfonsäure, Zimtsäure, 2-Acrylamido-2methylpropansulfonsäure oder 2-Acrylamido-2-methylpropanphosphonsäure, sowie deren Amide, Hydroxyalkylester und aminogruppen- oder ammoniumgruppenhaltige Ester und Amide und bei mehrfachen Säuren die teilweise veresterten Verbindungen, die noch mindestens eine Carboxygruppe aufweisen.

Bevorzugt sind Acrylsäure, Methacrylsäure, Ethacrylsäure, Crotonsäure, Maleinsäure, Fumarsäure, Itaconsäure, Citraconsäure, Mesaconsäure, Glutaconsäure, Aconitsäure, Vinylsulfonsäure und Zimtsäure, besonders bevorzugt sind Acrylsäure, Methacrylsäure, Crotonsäure, Maleinsäure und Fumarsäure, ganz besonders bevorzugt sind Acrylsäure und Methacrylsäure, insbesondere Acrylsäure.

Beispiele für Verbindungen, die mindestens eine und genau eine radikalisch polymerisierbare aufweisen sind Allylglycidylether, Vinylglycidylether, Glycidylacrylat und Glycidylmethacrylat, bevorzugt sind Glycidylacrylat und Glycidylmethacrylat.

Umsetzung der Carboxygruppe des hyperverzweigten Polyesters mit der Verbindung, die mindestens eine gegenüber Carboxygruppen reaktive Gruppe und genau eine radikalisch polymerisierbare Gruppe aufweist, erfolgt beispielsweise unter folgenden Reaktionsbedingungen:
Die Stöchiometrie der Reaktion beträgt beispielsweise 0,75 bis 1,25, bevorzugt 0,8 bis 1,2, besonders bevorzugt 0,9 bis 1,1 und ganz besonders bevorzugt 0,95 bis 1,05 mol an gegenüber Carboxygruppen reaktiven Gruppen pro mol Carboxygruppen im hyperverzweigten Polyester (beispielsweise bestimmbar über dessen Säurezahl).

Für die Reaktion können beide Komponenten oder bevorzugt der hyperverzweigte Polyester optional in einem Lösungsmittel gelöst werden. Dabei kann es sich um die gleichen Lösungsmittel handeln, wie sie oben für die Veresterungsreaktion der Oligohydroxycarbonsäuren beschrieben sind. Jedoch sind hier Alkohole und carbonylgruppenhaltige Lösungsmittel gleichermaßen bevorzugt.

Das eingesetzte Lösungsmittel sollte eine ausreichende Löslichkeit für die Reaktionskomponenten aufweisen. Dafür sind beispielsweise solche Lösungsmittel bevorzugt, die ausreichend polar sind und eine relative Dielektrizitätskonstante von 5 bis 80, bevorzugt 7 bis 50 und besonders bevorzugt 7,4 bis 40 aufweisen.

Bevorzugt sind polar aprotische Lösungsmittel, besonders bevorzugt sind Dimethylformamid, Dimethylacetamid, Acetonitril und Dimethylsulfoxid.

Meist wird der hyperverzweigte Polyester, gelöst in einem Lösungsmittel, vorgelegt und die Verbindung, die mindestens eine gegenüber Carboxygruppen reaktive Gruppe und genau eine radikalisch polymerisierbare Gruppe aufweist, portionsweise zugegeben.

Die Reaktionstemperatur kann von 50 bis 120 °C betragen, bevorzugt 60 bis 100 °C, besonders bevorzugt 70 bis 90 °C.

Die Dauer der Reaktion ist von der gewählten Temperatur abhängig. In der Regel sind 24 Stunden ausreichend, bevorzugt weniger als 18 und besonders bevorzugt weniger als 14 Stunden. In der Regel sind jedoch mindestens eine Stunde, bevorzugt mindestens 2 Stunden, besonders bevorzugt mindestens 4 Stunden, ganz besonders bevorzugt mindestens 6 Stunden und insbesondere mindestens 10 Stunden erforderlich.

Zur Beschleunigung der Reaktion kann es vorteilhaft sein, mindestens einen Katalysator zuzusetzen. Beispiele dafür sind Amine, bevorzugt sind tertiäre Amine. Besonders bevorzugt ist Tributylamin.

Gegenstand der vorliegenden Erfindung ist auch die Verwendung der erfindungsgemäßen hochfunktionellen, hochverzweigten, hyperverzweigten Polyester, die eine polymerisierbare Gruppe tragen, als Monomer bzw. Comonomer in der radikalischen Polymerisation. Die aus einer solchen (Co)Polymerisation erhaltenen Polymere bzw. Copolymere eignen sich beispielsweise in Lacksystemen, insbesondere in sogenannten Dual-Cure-Lacksystemen, in denen die Härtung über verschieden Härtungsmechanismen erfolgt, hier also beispielsweise durch radikalische Härtung der radikalisch polymerisierbaren Gruppe und durch Umsetzung der Hydroxygruppen mit Polyisocyanaten.

### Beispiele

Beispiel 1 Umsetzung von Dimethylolbuttersäure in 1,2-Dichlorethan, katalysiert mit para-Toluolsulfonsäure

In einen 4 L Dreihalskolben, ausgestattet mit Wasserabscheider, Innenthermometer und Rührer, wurden 250 g Dimethylolbuttersäure (DMBA) mit 1,4 L 1,2-Dichlorethan versetzt und 5,0 g para-Toluolsulfonsäure als Katalysator hinzugegeben. Anschließend wurde die Reaktionsmischung unter Rückfluß erhitzt (ca. 83 °C) und das bei der Veresterung entstehende Wasser über den Wasserabscheider entfernt. Nach 19 h Reaktionszeit wurden insgesamt 24,6 g Wasser entfernt, was einem Umsatz von ca. 83 % entspricht. Das polymere Produkt scheidet sich im Laufe der Reaktion als weißer Feststoff an der Kolbenwand ab. Anschließend wird das Lösemittel 1,2-Dichlorethan durch Filtration bzw. Destillation entfernt.

Das zahlenmittlere Molgewicht Mₙ des dargestellten Polyesters wurde mittels GPC (Eluent: Hexafluoroisopropanol [HFIP], Kalibrierung: PMMA (Poly methyl methacrylat)) zu 1.100 g/mol, das gewichtsmittlere Molgewicht M_{w} zu 2.200 g/mol bestimmt. Die Säurezahl wurde nach DIN 53240, Teil 2, zu 43 mg KOH / g Polymer bestimmt.

### Beispiel 1 a

Im Rahmen eines analogen Versuchsbeispiels zu Beispiel 1 wurden ingesamt 20,5 g Wasser entfernt, was einem geringeren Umsatz von ca. 67 % entspricht. Das polymere Produkt schied sich hierbei ebenfalls im Laufe der Reaktion als weißer Feststoff an der Kolbenwand ab. Anschließend wurde das Lösemittel 1,2-Dichlorethan durch Filtration bzw. Destillation entfernt.

Das zahlenmittlere Molgewicht Mₙ des dargestellten Polyesters wurde mittels GPC (Eluent: Hexafluoroisopropanol [HFIP], Kalibrierung: PMMA) zu 1.100 g/mol, das gewichtsmittlere Molgewicht M_{w} zu 1.700 g/mol bestimmt.

### Beispiel 2 (Vergleich zu Beispiel 1): Umsetzung von Dimethylolbuttersäure in Dichlormethan, katalysiert mit para-Toluolsulfonsäure

In einen 4 L Dreihalskolben, ausgestattet mit Wasserabscheider, Innenthermometer und Rührer, wurden 250 g Dimethylolbuttersäure (DMBA) mit 1,4 L Dichlormethan versetzt und 5,0 g para-Toluolsulfonsäure als Katalysator hinzugegeben. Anschließend wurde die Reaktionsmischung unter Rückfluß erhitzt (ca. 40 °C) und das bei der Veresterung entstehende Wasser über den Wasserabscheider entfernt. Hierbei zeigt sich, dass die Reaktionsgeschwindigkeit bei 40 °C zu niedrig ist, als dass in nennenswerterweise Wasser aus dem Reaktionsansatz entfernt werden könnte.

### Beispiel 3 (Vergleich zu Beispiel 1): Umsetzung von Dimethylolbuttersäure in 1,1,2,2-Tetrachlormethan, katalysiert mit para-Toluolsulfonsäure

In einen 4 L Dreihalskolben, ausgestattet mit Wasserabscheider, Innenthermometer und Rührer, wurden 100 g Dimethylolbuttersäure (DMBA) mit 1,4 L 1,1,2,2-Tetrachlorethan versetzt und 2,0 g para-Toluolsulfonsäure als Katalysator hinzugegeben. Anschließend wurde die Reaktionsmischung unter Rückfluß erhitzt (ca. 147 °C) und das bei der Veresterung entstehende Wasser über den Wasserabscheider entfernt. Nach 12 h Reaktionszeit wurden insgesamt 26,3 g Wasser entfernt, was einem Umsatz von ca. 88 % entspricht. Anschließend wird das Lösemittel 1,1,2,2-Tetrachlorethan durch Destillation entfernt. Das Produkt enthält deutliche Anteile an Komponenten mit mehr als einer CÖOH-Gruppe pro Molekül.

### Beispiel 4 (Vergleich zu Beispiel 1): Umsetzung von Dimethylolbuttersäure in Aceton, katalysiert mit Titan(IV)-butylat

In einen 4 L Dreihalskolben, ausgestattet mit Destillationsaufsatz bestehend aus absteigendem Kühler und einem Vorlagekolben, Innenthermometer und Rührer, wurden 151 g Dimethylolbuttersäure (DMBA) mit 0,2 g Titan(IV)-butylat als Katalysator versetzt, in wasserfreiem Aceton gelöst und langsam aufgeheizt. Dabei wurde aus der Reaktionsmischung kontinuierlich Aceton abdestilliert, das als Schlepper für das Kondensationsnebenprodukt Wasser dient. Um den hierbei auftretenden Lösemittelverlust auszugleichen, wurde parallel dazu ständig neues wasserfreies Aceton in entsprechender Menge zur Mischung hinzugegeben. Der Reaktionsfortgang wurde durch Bestimmung des Wassergehalts in den einzelnen Acetondestillaten mittels Karl-Fischer-Titration verfolgt. Nach ca. 72 Stunden Reaktionszeit wurden insgesamt ca. 15,6 g Wasser entfernt, was einem Umsatz von ca. 85 % entspricht. Das Produkt enthält überwiegend Komponenten mit Acetonid-geschützten Dioleinheiten, die in einem weiteren Reaktionsschritt erst wieder abgespalten werden müssten, was zusätzlichen, unnötigen Aufwand bedeuten würde.

### Beispiel 5 (Vergleich zu Beispiel 1): Umsetzung von Dimethylolbuttersäure ohne Lösemittel, katalysiert mit para-Toluolsulfonsäure

In einen 4 L Dreihalskolben, ausgestattet mit Destillationsaufsatz bestehend aus einer kurzen Vigreux-Kolonne, einem absteigendem Kühler und einem Vorlagekolben, Innenthermometer und Rührer, wurden 100 g Dimethylolbuttersäure (DMBA) mit 2,0 g para-Toluolsulfonsäure als Katalysator versetzt und langsam aufgeheizt. Dabei wurde die Reaktionsmischung auf bis zu 220 °C erhitzt und das bei der Veresterung entstehende Wasser über die Destillationsapparatur entfernt. Nach ca. 3 h Reaktionszeit wurden insgesamt 10,1 g Wasser entfernt, was einem Umsatz von ca. 82 % entspricht. Das Produkt enthält deutliche Anteile an Komponenten mit mehr als einer COOH-Gruppe pro Molekül.

### Beispiel 6 (Vergleich zu Beispiel 1): Umsetzung von Dimethylolbuttersäure ohne Lösemittel, katalysiert mit Titan(IV)-butylat

In einen 4 L Dreihalskolben, ausgestattet mit Destillationsaufsatz bestehend aus einer kurzen Vigreux-Kolonne, einem absteigendem Kühler und einem Vorlagekolben, Innenthermometer und Rührer, wurden 100 g Dimethylolbuttersäure (DMBA) mit 0,2 g Titan(IV)-butylat als Katalysator versetzt und langsam aufgeheizt. Dabei wurde die Reaktionsmischung auf bis zu 220 °C erhitzt und das bei der Veresterung entstehende Wasser über die Destillationsapparatur entfernt. Nach 1,5 h Reaktionszeit wurden insgesamt 10,2 g Wasser entfernt, was einem Umsatz von ca. 83 % entspricht. Das Produkt enthält deutliche Anteile an Komponenten mit mehr als einer COOH-Gruppe pro Molekül.

### Beispiel 7: Umsetzung von Dimethylolbuttersäure und Dimethylolpropionsäure in 1,2-Dichlorethan, katalysiert mit para-Toluolsulfonsäure

In einen 4 L Dreihalskolben, ausgestattet mit Wasserabscheider, Innenthermometer und Rührer, wurden 132 g Dimethylolbuttersäure (DMBA) und 118 g Dimethylolpropionsäure (DMPA) mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 84 °C) und das bei der Veresterung entstehende Wasser über den Wasserabscheider entfernt. Nach 20 h Reaktionszeit wurden insgesamt 27,5 g Wasser entfernt, was einem Umsatz von ca. 90 % entspricht. Das polymere Produkt schied sich im Laufe der Reaktion als weißer Feststoff an der Kolbenwand ab. Anschließend wurde das Lösemittel 1,2-Dichlorethan durch Filtration bzw. Destillation entfernt.

Das zahlenmittlere Molgewicht Mₙ des dargestellten Polyesters wurde mittels GPC (Eluent: Hexafluoroisopropanol [HFIP], Kalibrierung: PMMA) zu 2.200 g/mol, das gewichtsmittlere Molgewicht M_{w} zu 4.200 g/mol bestimmt. Die Säurezahl wurde nach DIN 53240, Teil 2, zu 24 mg KOH / g Polymer bestimmt.

### Beispiel 8: Umsetzung von Dimethylolpropionsäure in 1,2-Dichlorethan, katalysiert mit para-Toluolsulfonsäure

In einen 4 L Dreihalskolben, ausgestattet mit Wasserabscheider, Innenthermometer und Rührer, wurden 250 g Dimethylolpropionsäure (DMPA) mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 84 °C) und das bei der Veresterung entstehende Wasser über den Wasserabscheider entfernt. Nach 36 h Reaktionszeit wurden insgesamt 32,0 g Wasser entfernt, was einem Umsatz von ca. 96 % entspricht. Das polymere Produkt schied sich im Laufe der Reaktion als weißer Feststoff an der Kolbenwand ab. Anschließend wurde das Lösemittel 1,2-Dichlorethan durch Filtration bzw. Destillation entfernt.

Das zahlenmittlere Molgewicht Mₙ des dargestellten Polyesters wurde mittels GPC (Eluent: Hexafluoroisopropanol [HFIP], Kalibrierung: PMMA) zu 5.400 g/mol, das gewichtsmittlere Molgewicht M_{w} zu 15.400 g/mol bestimmt. Die Säurezahl wurde nach DIN 53240, Teil 2, zu 10 mg KOH / g Polymer bestimmt.

### Beispiel 9: Umsetzung von Dimethylolbuttersäure und Isononansäure in 1,2-Dichlorethan, katalysiert mit para-Toluolsulfonsäure

In einen 4 L Dreihalskolben, ausgestattet mit Wasserabscheider, Innenthermometer und Rührer, wurden 236 g Dimethylolbuttersäure (DMBA) und 24,5 g Isononansäure mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 85 °C) und das bei der Veresterung entstehende Wasser über den Wasserabscheider entfernt. Nach 48 h Reaktionszeit wurden insgesamt 18,4 g Wasser entfernt, was einem Umsatz von ca. 60 % entspricht. Anschließend wurde das Lösemittel 1,2-Dichlorethan durch Filtration bzw. Destillation entfernt.

### Beispiel 10: Umsetzung von Dimethylolbuttersäure und Isononansäure in 1,2-Dichlorethan, katalysiert mit para-Toluolsulfonsäure

In einen 4 L Dreihalskolben, ausgestattet mit Wasserabscheider, Innenthermometer und Rührer, wurden 236 g Dimethylolbuttersäure (DMBA) und 49,0 g Isononansäure mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 84 °C) und das bei der Veresterung entstehende Wasser über den Wasserabscheider entfernt. Nach 24 h Reaktionszeit wurden insgesamt 21,0 g Wasser entfernt, was einem Umsatz von ca. 63 % entspricht. Anschließend wurde das Lösemittel 1,2-Dichlorethan durch Filtration bzw. Destillation entfernt.

### Beispiel 11: Umsetzung von Dimethylolbuttersäure und γ-Butyrolacton in 1,2-Dichlorethan, katalysiert mit para-Toluolsulfonsäure

In einen 4 L Dreihalskolben, ausgestattet mit Wasserabscheider, Innenthermometer und Rührer, wurden 236 g Dimethylolbuttersäure (DMBA) und 13,5 g γ-Butyrolacton mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 84 °C) und das bei der Veresterung entstehende Wasser über den Wasserabscheider entfernt. Nach 48 h Reaktionszeit wurden insgesamt 17,5 g Wasser entfernt, was einem Umsatz von ca. 63 % entspricht. Anschließend wurde das Lösemittel 1,2-Dichlorethan durch Filtration bzw. Destillation entfernt.

### Beispiel 12: Umsetzung von Dimethylolbuttersäure und 2-[2-(2-Methoxyethoxy)-ethoxy]essigsäure in 1,2-Dichlorethan, katalysiert mit para-Toluolsulfonsäure

In einen 4 L Dreihalskolben, ausgestattet mit Wasserabscheider, Innenthermometer und Rührer, wurden 756 g Dimethylolbuttersäure (DMBA) und 198 g 2-[2-(2-Methoxyethoxy)-ethoxy]essigsäure mit 2,0 L 1,2-Dichlorethan versetzt und 5,0 g para-Toluolsulfonsäure als Katalysator hinzugegeben. Anschließend wurde die Reaktionsmischung unter Rückfluß erhitzt (ca. 84 °C) und das bei der Veresterung entstehende Wasser über den Wasserabscheider entfernt. Nach 25 h Reaktionszeit wurden insgesamt 93,5 g Wasser entfernt, was einem Umsatz von ca. 87 % entspricht. Anschließend wurde das Lösemittel 1,2-Dichlorethan durch Filtration bzw. Destillation entfernt.

### Beispiel 13: Umsetzung des Polyesters aus Beispiel 1 mit Glycidylmethacrylat

320 g einer Lösung des Polyesters aus Beispiel 1 in Dimethylformamid (DMF) (16 Gew.-%) wurden mit 50 g Molekularsieb getrocknet und anschließend in einen 1 L Dreihalskolben, ausgestattet mit Rührer, Innenthermometer und Rückflußkühler, gegeben. Danach wurden entsprechend der Zahl der Säuregruppen im Polyester 14,8 g Glycidylmethacrylat (1 Äq. bezogen auf die Zahl der COOH-Gruppen), der Katalysator Tributylamin (0,97 g) sowie die Stabilisatoren Hydrochinonmonomethylether (MEHQ, 0,03 g) und 2,6-Di-tert.-butyl-4-methylphenol (DBPC, 0,03 g) hinzugesetzt. Die Mischung wurde 12 h lang bei 80 °C gerührt. Im Anschluß daran wurde das Lösemittel am Rotationsverdampfer entfernt.

Das zahlenmittlere Molgewicht Mₙ des dargestellten Polyesters enthaltend eine polymerisierbare Gruppe wurde mittels GPC (Eluent: Hexafluoroisopropanol [HFIP], Kalibrierung: PMMA) zu 1.100 g/mol, das gewichtsmittlere Molgewicht M_{w} zu 5.000 g/mol bestimmt. Die Säurezahl wurde nach DIN 53240, Teil 2, zu 0,1 mg KOH / g Polymer bestimmt.

### Beispiel 14: Umsetzung des Polyesters aus Beispiel 7 mit Glycidylmethacrylat

325 g einer Lösung des Polyesters aus Beispiel 7 in Dimethylformamid (DMF) (10 Gew.-%) wurden mit 80 g Molekularsieb getrocknet und anschließend in einen 1 L Dreihalskolben, ausgestattet mit Rührer, Innenthermometer und Rückflußkühler, gegeben. Danach wurden entsprechend der Zahl der Säuregruppen im Polyester 2,2 g Glycidylmethacrylat (1.1 Äq. bezogen auf die Zahl der COOH-Gruppen), der Katalysator Tributylamin (0,52 g) sowie die Stabilisatoren Hydrochinonmonomethylether (MEHQ, 0,02 g) und 2,6-Di-tert.-butyl-4-methylphenol (DBPC, 0,02 g) hinzugesetzt. Die Mischung wurde 16 h lang bei 80 °C gerührt. Im Anschluß daran wurde das Lösemittel am Rotationsverdampfer entfernt.

Das zahlenmittlere Molgewicht Mₙ des dargestellten Polyesters wurde mittels GPC (Eluent: Hexafluoroisopropanol [HFIP], Kalibrierung: PMMA) zu 2.300 g/mol, das gewichtsmittlere Molgewicht M_{w} zu 4.600 g/mol bestimmt. Die Säurezahl wurde nach DIN 53240, Teil 2, zu 0,1 mg KOH / g Polymer bestimmt.

### Beispiel 15: Umsetzung des Polyesters aus Beispiel 8 mit Glycidylmethacrylat

113 g einer Lösung des Polyesters aus Beispiel 8 in Dimethylformamid (DMF) (10 Gew.-%) wurden mit 30 g Molekularsieb getrocknet und anschließend in einen 1 L Dreihalskolben, ausgestattet mit Rührer, Innenthermometer und Rückflußkühler, gegeben. Danach wurden entsprechend der Zahl der Säuregruppen im Polyester 0,32 g Glycidylmethacrylat (1.1 Äq. bezogen auf die Zahl der COOH-Gruppen), der Katalysator Tributylamin (0,17 g) sowie die Stabilisatoren Hydrochinonmonomethylether (MEHQ, 0,01 g) und 2,6-Di-tert.-butyl-4-methylphenol (DBPC, 0,01 g) hinzugesetzt. Die Mischung wurde 16 h lang bei 80 °C gerührt. Im Anschluß daran wurde das Lösemittel am Rotationsverdampfer entfernt.

Das zahlenmittlere Molgewicht Mₙ des dargestellten Polyesters wurde mittels GPC (Eluent: Hexafluoroisopropanol [HFIP], Kalibrierung: PMMA) zu 5.000 g/mol, das gewichtsmittlere Molgewicht M_{w} zu 17.700 g/mol bestimmt. Die Säurezahl wurde nach DIN 53240, Teil 2, zu 0,0 mg KOH / g Polymer bestimmt.

## Patentansprüche

1. Hyperverzweigte Polyester mit einem gewichtsmittleren Molekulargewicht Mw zwischen 500 und 300.000 g/mol, erhältlich durch Umsetzung mindestens einer Oligohydroxycarbonsäure, in Gegenwart mindestens eines Katalysators und in Gegenwart mindestens eines unter den Reaktionsbedingungen inerten Lösungsmittels, **dadurch gekennzeichnet, daß** man die Temperatur während der Reaktion auf nicht mehr als 120 °C einstellt, die mittlere Funktionalität an Carboxyfunktionen pro Molekül mehr als 0,8 und weniger als 1,05 beträgt und die mittlere Funktionalität an Ethergruppen -CH₂-O-CH₂- weniger als 0,20 beträgt und der Katalysator ausgewählt ist aus der Gruppe bestehend aus Säuren, Metallchelaten, Metallalkoholaten, Metallalkanoaten und metallorganischen Verbindungen.

2. Hyperverzweigte Polyester gemäß Anspruch 1, **dadurch gekennzeichnet, daß** zusätzlich die mittlere Funktionalität an Lactonen weniger als 0,10 beträgt.

3. Hyperverzweigte Polyester gemäß einem der vorstehenden Ansprüche, **dadurch gekennzeichnet, daß** es sich bei der Oligohydroxycarbonsäure um eine Dihydroxyalkancarbonsäure handelt.

4. Hyperverzweigte Polyester gemäß einem der Ansprüche 1 oder 2, **dadurch gekennzeichnet, daß** es sich bei der Oligohydroxycarbonsäure um eine 2,2-Bis(hydroxymethyl)alkancarbonsäure handelt.

5. Hyperverzweigte Polyester gemäß einem der vorstehenden Ansprüche, **dadurch gekennzeichnet, daß** man die Umsetzung in Abwesenheit von anderen Estern der Oligohydroxycarbonsäure durchführt als solche Ester der Oligohydroxycarbonsäure mit sich selbst.

6. Hyperverzweigte Polyester gemäß einem der vorstehenden Ansprüche, **dadurch gekennzeichnet, daß** man die Umsetzung in Abwesenheit von 5-alkylsubstituierten 1,3-Dioxan-5-carbonsäuren durchführt.

7. Hyperverzweigte Polyester gemäß einem der vorstehenden Ansprüche, **dadurch gekennzeichnet, daß** man die Umsetzung in Abwesenheit von ausschließlich Hydroxygruppen enthaltenden Verbindungen durchführt.

8. Hyperverzweigte Polyester gemäß einem der vorstehenden Ansprüche, **dadurch gekennzeichnet, daß** es sich bei der Oligohydroxycarbonsäure um Dimethylolpropionsäure handelt.

9. Hyperverzweigte Polyester gemäß einem der Ansprüche 1 bis 7, **dadurch gekennzeichnet, daß** es sich bei der Oligohydroxycarbonsäure um Dimethylolbuttersäure handelt.

10. Hyperverzweigte Polyester gemäß einem der Ansprüche 1 bis 7, **dadurch gekennzeichnet, daß** die Oligohydroxycarbonsäure ausgewählt ist aus der Gruppe bestehend aus 3,5-Dihydroxybenzoesäure und 4,4-Bis(4-hydroxyphenyl)-valeriansäure.

11. Hyperverzweigte Polyester gemäß einem der vorstehenden Ansprüche, **dadurch gekennzeichnet, daß** das Lösungsmittel einen Siedepunkt bei Normaldruck von nicht mehr als 150 °C aufweist.

12. Hyperverzweigte Polyester gemäß einem der vorstehenden Ansprüche, **dadurch gekennzeichnet, daß** das Lösungsmittel eine relative Dielektrizitätskonstante von 5 bis 80 aufweist.

13. Hyperverzweigte Polyester gemäß einem der vorstehenden Ansprüche, **dadurch gekennzeichnet, daß** es sich bei dem Katalysator um eine Säure mit einem pKs-Wert von kleiner als 4,75 handelt.

14. Hyperverzweigte Polyester gemäß einem der Ansprüche 1 bis 12, **dadurch gekennzeichnet, daß** es sich bei dem Katalysator um eine metallorganische Verbindung handelt.

15. Hyperverzweigte Polyester gemäß einem der vorstehenden Ansprüche, **dadurch gekennzeichnet, daß** die Umsetzung in Gegenwart von monofunktionellen Säuren oder deren Derivaten erfolgt.

16. Hyperverzweigte Polyester gemäß einem der Ansprüche 1 bis 14, **dadurch gekennzeichnet, daß** nach Abschluß der Umsetzung der Oligohydroxycarbonsäure eine Umsetzung mit monofunktionellen Säuren erfolgt.

17. Hyperverzweigte Polyester gemäß einem der Ansprüche 15 oder 16, **dadurch gekennzeichnet, daß** es sich bei der monofunktionellen Säure um eine Carbonsäure oder Sulfonsäure handelt.

18. Hyperverzweigte Polyester gemäß einem der Ansprüche 15 oder 16, **dadurch gekennzeichnet, daß** es sich bei der monofunktionellen Säure um eine Alkyl- oder Alkenylcarbonsäuren handelt, deren Alkyl- oder Alkenylrest bis zu 20 Kohlenstoffatome aufweist.

19. Hyperverzweigte Polyester gemäß einem der Ansprüche 15 oder 16. **dadurch gekennzeichnet, daß** die monofunktionellen Säure die Formel
R²-[-CH₂-CH₂-O]_{y}-R³-COOH
aufweist, worin
R² eine 1 bis 8 Kohlenstoffatome aufweisende Alkylgruppe,
y gleich 0 oder eine positive ganze Zahl von 1 bis 20 und
R³ eine 1 bis 8 Kohlenstoffatome aufweisende Alkylengruppe ist.

20. Hyperverzweigte Polyester gemäß einem der vorstehenden Ansprüche, **dadurch gekennzeichnet, daß** die Umsetzung in Gegenwart von Monohydroxycarbonsäuren oder deren Derivaten erfolgt.

21. Hyperverzweigte Polyester gemäß Anspruch 20, **dadurch gekennzeichnet, daß** die Monohydroxycarbonsäure solche der Formel
HO-R⁴-COOH
ist, worin
R⁴ eine 1 bis 8, bevorzugt 1 bis 4, besonders bevorzugt 1 bis 2 und ganz besonders bevorzugt ein Kohlenstoffatom aufweisende Alkylengruppe bedeutet.

22. Radikalisch polymerisierbare, hyperverzweigte Polyester, **dadurch gekennzeichnet, daß** man hyperverzweigte Polyester gemäß einem der vorstehenden Ansprüche mit mindestens einer Verbindung umsetzt, die mindestens eine gegenüber Carboxygruppen reaktive Gruppe und genau eine radikalisch polymerisierbare Gruppe trägt.

23. Radikalisch polymerisierbare, hyperverzweigte Polyester gemäß Anspruch 22, **dadurch gekennzeichnet, daß** die radikalisch polymerisierbare Gruppe ausgewählt ist aus der Gruppe bestehend aus Allyl-, Methallyl-, Vinylether-, Acryl-, Methacryl- und 2-Phenyl-ethen-1-yl- (Styrol-) Gruppen.

24. Radikalisch polymerisierbare, hyperverzweigte Polyester gemäß Anspruch 22, **dadurch gekennzeichnet, daß** es sich bei der Verbindung, die mindestens eine gegenüber Carboxygruppen reaktive Gruppe und genau eine radikalisch polymerisierbare Gruppe trägt, um das formale Umsetzungsprodukt von Epichlorhydrin (1-Chlor-2,3-epoxypropan) mit einer Verbindung, die genau eine radikalisch polymerisierbare Gruppe und mindestens eine Säurefunktion enthält, handelt.

25. Radikalisch polymerisierbare, hyperverzweigte Polyester gemäß Anspruch 24, **dadurch gekennzeichnet, daß** es sich bei der Verbindung, die genau eine radikalisch polymerisierbare Gruppe und mindestens eine Säurefunktion enthält, um Acrylsäure, Methacrylsäure, Ethacrylsäure, α-Chloracrylsäure, Crotonsäure, Maleinsäure, Fumarsäure, Itaconsäure, Citraconsäure, Mesaconsäure, Glutaconsäure, Aconitsäure, Vinylsulfonsäure, Vinylphosphonsäure, Allylsulfonsäure, Sulfoethylacrylat, Sulfoethylmethacrylat, 2- oder 3-Sulfopropylacrylat, 2- oder 3-Sulfopropylmethacrylat, 2-Hydroxy-3-acryloxypropylsulfonsäure, 2-Hydroxy-3-methacryl-oxypropylsulfonsäure, Allylphosphonsäure, Styrolsulfonsäure, Zimtsäure, 2-Acrylamido-2methylpropansulfonsäure oder 2-Acrylamido-2-methylpropanphosphonsäure handelt, sowie deren Amide, Hydroxyalkylester und aminogruppen- oder ammoniumgruppenhaltige Ester und Amide und bei mehrfachen Säuren die teilweise veresterten Verbindungen, die noch mindestens eine Carboxygruppe aufweisen.

26. Radikalisch polymerisierbare, hyperverzweigte Polyester gemäß Anspruch 22, **dadurch gekennzeichnet, daß** es sich bei der Verbindung, die mindestens eine gegenüber Carboxygruppen reaktive Gruppe und genau eine radikalisch polymerisierbare Gruppe trägt um Allylglycidylether, Vinylglycidylether, Glycidylacrylat oder Glycidylmethacrylat handelt.

27. Verfahren zur Herstellung von radikalisch polymerisierbaren, hyperverzweigten Polyestern gemäß einem der Ansprüche 22 bis 26, **dadurch gekennzeichnet, daß** man mindestens einen hyperverzweigten Polyester gemäß einem der Ansprüche 1 bis 19 mit mindestens einer Verbindung umsetzt, die mindestens eine gegenüber Carboxygruppen reaktive Gruppe und genau eine radikalisch polymerisierbare Gruppe trägt.

28. Verwendung von radikalisch polymerisierbaren hochfunktionellen, hochverzweigten, hyperverzweigten Polyestern gemäß einem der Ansprüche 22 bis 26 als Monomer oder Comonomer in der radikalischen Polymerisation.

29. Verwendung von aus einer (Co)Polymerisation erhaltenen Polymere oder Copolymere, die radikalisch polymerisierbare, hochfunktionelle, hochverzweigte, hyperverzweigte Polyestern gemäß einem der Ansprüche 22 bis 26 als Monomer oder Comonomer in einpolymerisierter Form enthalten, in Lacksystemen.

## Claims

1. A hyperbranched polyester having a weight-average molecular weight M_{w} between 500 and 300 000 g/mol, obtainable by reacting at least one oligohydroxycarboxylic acid in the presence of at least one catalyst and in the presence of at least one solvent inert under the reaction conditions, wherein the temperature during the reaction is set at not more than 120°C, the average carboxyl functionality per molecule is more than 0.8 and less than 1.05, and the average ether group functionality -CH₂-O-CH₂- is less than 0.20, and the catalyst is selected from the group consisting of acids, metal chelates, metal alkoxides, metal alkanoates and organometallic compounds.

2. The hyperbranched polyester according to claim 1, wherein additionally the average lactone functionality is less than 0.10.

3. The hyperbranched polyester according to either of the preceding claims, wherein the oligohydroxycarboxylic acid is a dihydroxyalkanecarboxylic acid.

4. The hyperbranched polyester according to either of claims 1 and 2, wherein the oligohydroxycarboxylic acid is a 2,2-bis(hydroxymethyl)alkanecarboxylic acid.

5. The hyperbranched polyester according to any one of the preceding claims, wherein the reaction is carried out in the absence of esters of the oligohydroxycarboxylic acid other than such esters of the oligohydroxycarboxylic acid with itself.

6. The hyperbranched polyester according to any one of the preceding claims, wherein the reaction is carried out in the absence of 5-alkyl-substituted 1,3-dioxane-5-carboxylic acids.

7. The hyperbranched polyester according to any one of the preceding claims, wherein the reaction is carried out in the absence of compounds comprising exclusively hydroxyl groups.

8. The hyperbranched polyester according to any one of the preceding claims, wherein the oligohydroxycarboxylic acid is dimethylolpropionic acid.

9. The hyperbranched polyester according to any one of claims 1 to 7, wherein the oligohydroxycarboxylic acid is dimethylolbutyric acid.

10. The hyperbranched polyester according to any one of claims 1 to 7, wherein the oligohydroxycarboxylic acid is selected from the group consisting of 3,5-dihydroxybenzoic acid and 4,4-bis(4-hydroxyphenyl)valeric acid.

11. The hyperbranched polyester according to any one of the preceding claims, wherein the solvent has a boiling point under atmospheric pressure of not more than 150°C.

12. The hyperbranched polyester according to any one of the preceding claims, wherein the solvent has a relative dielectric constant of 5 to 80.

13. The hyperbranched polyester according to any one of the preceding claims, wherein the catalyst is an acid having a pKa of less than 4.75.

14. The hyperbranched polyester according to any one of claims 1 to 12, wherein the catalyst is an organometallic compound.

15. The hyperbranched polyester according to any one of the preceding claims, wherein the reaction takes places in the presence of monofunctional acids or derivatives thereof.

16. The hyperbranched polyester according to any one of claims 1 to 14, wherein, after the conclusion of the reaction of the oligohydroxycarboxylic acid, a reaction with monofunctional acids takes place.

17. The hyperbranched polyester according to either of claims 15 and 16, wherein the monofunctional acid is a carboxylic acid or sulfonic acid.

18. The hyperbranched polyester according to either of claims 15 and 16, wherein the monofunctional acid is an alkyl- or alkenylcarboxylic acids whose alkyl or alkenyl radical contains up to 20 carbon atoms.

19. The hyperbranched polyester according to either of claims 15 and 16, wherein the monofunctional acid has the formula
R²-[-CH₂-CH₂-O]_{y}-R³-COOH
in which
R² is an alkyl group having 1 to 8 carbon atoms,
y is 0 or a positive integer from 1 to 20, and R³ is an alkylene group having 1 to 8 carbon atoms.

20. The hyperbranched polyester according to any one of the preceding claims, wherein the reaction takes place in the presence of monohydroxycarboxylic acids or derivatives thereof.

21. The hyperbranched polyester according to claim 20, wherein the monohydroxy-carboxylic acid is of the formula
HO-R⁴-COOH
in which
R⁴ is an alkylene group having 1 to 8, preferably 1 to 4, more preferably 1 to 2, and very preferably one carbon atom.

22. A free-radically polymerizable hyperbranched polyester wherein a hyperbranched polyester according to any one of the preceding claims is reacted with at least one compound which carries at least one carboxyl-reactive group and precisely one free-radically polymerizable group.

23. The free-radically polymerizable, hyperbranched polyester according to claim 22, wherein the free-radically polymerizable group is selected from the group consisting of allyl, methallyl, vinyl ether, acryloyl, methacryloyl and 2-phenylethen-1-yl (styrene) groups.

24. The free-radically polymerizable, hyperbranched polyester according to claim 22, wherein the compound which carries at least one carboxyl-reactive group and precisely one free-radically polymerizable group is the formal reaction product of epichlorohydrin (1-chloro-2,3-epoxypropane) with a compound which comprises precisely one free-radically polymerizable group and at least one acid function.

25. The free-radically polymerizable, hyperbranched polyester according to claim 24, wherein the compound which comprises precisely one free-radically polymerizable group and at least one acid function is acrylic acid, methacrylic acid, ethacrylic acid, α-chloroacrylic acid, crotonic acid, maleic acid, fumaric acid, itaconic acid, citraconic acid, mesaconic acid, glutaconic acid, aconitic acid, vinylsulfonic acid, vinylphosphonic acid, allylsulfonic acid, sulfoethyl acrylate, sulfoethyl methacrylate, 2- or 3-sulfopropyl acrylate, 2- or 3-sulfopropyl methacrylate, 2-hydroxy-3-acryloyloxypropylsulfonic acid, 2-hydroxy-3-methacryloyloxypropylsulfonic acid, allylphosphonic acid, styrenesulfonic acid, cinnamic acid, 2-acrylamido-2-methylpropanesulfonic acid or 2-acrylamido-2-methylpropanephosphonic acid, or one of their amides, hydroxyalkyl esters and amino- or ammonio-containing esters and amides and, in the case of polybasic acids, the partly esterified compounds which still contain at least one carboxyl group.

26. The free-radically polymerizable, hyperbranched polyester according to claim 22, wherein the compound which carries at least one carboxyl-reactive group and precisely one free-radically polymerizable group is allyl glycidyl ether, vinyl glycidyl ether, glycidyl acrylate or glycidyl methacrylate.

27. A process for preparing a free-radically polymerizable, hyperbranched polyester according to any one of claims 22 to 26, which comprises reacting at least one hyperbranched polyester according to any one of claims 1 to 19 with at least one compound which carries at least one carboxyl-reactive group and precisely one free-radically polymerizable group.

28. The use of a free-radically polymerizable, high-functionality, highly branched, hyperbranched polyester according to any one of claims 22 to 26, as a monomer or comonomer in free-radical polymerization.

29. The use of a polymer or copolymer obtained from a (co)polymerization and comprising free-radically polymerizable, high-functionality, highly branched, hyperbranched polyesters according to any one of claims 22 to 26, as monomer or comonomer in (co)polymerized form, in coating systems.

## Revendications

1. Polyesters hyperramifiés présentant un poids moléculaire pondéral moyen M_{w} entre 500 et 300 000 g/mole, pouvant être obtenus par transformation d'au moins un acide oligohydroxycarboxylique, en présence d'au moins un catalyseur et en présence d'au moins un solvant inerte dans les conditions de réaction, **caractérisés en ce qu'**on règle la température pendant la réaction à pas plus de 120°C, la fonctionnalité moyenne en fonctions carboxy par molécule est supérieure à 0,8 et inférieure à 1,05 et la fonctionnalité moyenne en groupes éther -CH₂-O-CH₂-est inférieure à 0,20 et le catalyseur est choisi dans le groupe constitué par les acides, les chélates métalliques, les alcoolates métalliques, les alcanoates métalliques et les composés métallo-organiques.

2. Polyesters hyperramifiés selon la revendication 1, **caractérisés en ce qu'**en outre, la fonctionnalité moyenne en lactones est inférieure à 0,10.

3. Polyesters hyperramifiés selon l'une quelconque des revendications précédentes, **caractérisés en ce qu'**il s'agit, pour l'acide oligohydroxycarboxylique, d'un acide dihydroxyalcanecarboxylique.

4. Polyesters hyperramifiés selon l'une quelconque des revendications 1 ou 2, **caractérisés en ce qu'**il s'agit, pour l'acide oligohydroxycarboxylique, d'un acide 2,2-bis(hydroxyméthyl)alcanecarboxylique.

5. Polyesters hyperramifiés selon l'une quelconque des revendications précédentes, **caractérisés en ce qu'**on réalise la transformation en l'absence d'autres esters de l'acide oligohydroxycarboxylique que les esters de l'acide oligohydroxycarboxylique avec lui-même.

6. Polyesters hyperramifiés selon l'une quelconque des revendications précédentes, **caractérisés en ce qu'**on réalise la transformation en l'absence d'acides 1,3-dioxane-5-carboxyliques substitués par alkyle en 5ème position.

7. Polyesters hyperramifiés selon l'une quelconque des revendications précédentes, **caractérisés en ce qu'**on réalise la transformation en l'absence de composés contenant exclusivement des groupes hydroxy.

8. Polyesters hyperramifiés selon l'une quelconque des revendications précédentes, **caractérisés en ce qu'**il s'agit, pour l'acide oligohydroxycarboxylique, d'acide diméthylolpropionique.

9. Polyesters hyperramifiés selon l'une quelconque des revendications 1 ou 7, **caractérisés en ce qu'**il s'agit, pour l'acide oligohydroxycarboxylique, d'acide diméthylolbutyrique.

10. Polyesters hyperramifiés selon l'une quelconque des revendications 1 ou 7, **caractérisés en ce que** l'acide oligohydroxycarboxylique est choisi dans le groupe constitué par l'acide 3,5-dihydroxybenzoïque et l'acide 4,4-bis(4-hydroxyphényl)-valérianique.

11. Polyesters hyperramifiés selon l'une quelconque des revendications précédentes, **caractérisés en ce que** le solvant présente un point d'ébullition à pression normale qui n'est pas supérieur à 150°C.

12. Polyesters hyperramifiés selon l'une quelconque des revendications précédentes, **caractérisés en ce que** le solvant présente une constante diélectrique relative de 5 à 80.

13. Polyesters hyperramifiés selon l'une quelconque des revendications précédentes, **caractérisés en ce qu'**il s'agit, pour le catalyseur, d'un acide présentant un pKa inférieur à 4,75.

14. Polyesters hyperramifiés selon l'une quelconque des revendications 1 ou 12, **caractérisés en ce qu'**il s'agit, pour le catalyseur, d'un composé métallo-organique.

15. Polyesters hyperramifiés selon l'une quelconque des revendications précédentes, **caractérisés en ce que** la transformation a lieu en présence d'acides monofonctionnels ou de leurs dérivés.

16. Polyesters hyperramifiés selon l'une quelconque des revendications 1 ou 14, **caractérisés en ce qu'**après la fin de la transformation de l'acide oligohydroxycarboxylique, une transformation avec des acides monofonctionnels a lieu.

17. Polyesters hyperramifiés selon l'une quelconque des revendications 15 ou 16, **caractérisés en ce qu'**il s'agit, pour l'acide monofonctionnel, d'un acide carboxylique ou d'un acide sulfonique.

18. Polyesters hyperramifiés selon l'une quelconque des revendications 15 ou 16, **caractérisés en ce qu'**il s'agit, pour l'acide monofonctionnel, d'un acides alkylcarboxyliques ou alcénylcarboxyliques, dont le radical alkyle ou alcényle présente jusqu'à 20 atomes de carbone.

19. Polyesters hyperramifiés selon l'une quelconque des revendications 15 ou 16, **caractérisés en ce que** l'acide monofonctionnel présente la formule
R²-[-CH₂-CH₂-O]_{y}-R³-COOH
dans laquelle
R² représente un groupe alkyle présentant 1 à 8 atomes de carbone,
y vaut 0 ou un nombre entier positif de 1 à 20 et
R³ représente un groupe alkylène présentant 1 à 8 atomes de carbone.

20. Polyesters hyperramifiés selon l'une quelconque des revendications précédentes, **caractérisés en ce que** la transformation a lieu en présence d'acides monohydroxycarboxyliques ou de leurs dérivés.

21. Polyesters hyperramifiés selon la revendication 20, **caractérisés en ce que** l'acide monohydroxycarboxylique est un acide de formule
HO-R⁴-COOH
dans laquelle
R⁴ signifie un groupe alkylène comprenant 1 à 8, de préférence 1 à 4, de manière particulièrement préférée 1 à 2 et de manière tout particulièrement préférée un atome de carbone.

22. Polyesters hyperramifiés polymérisables par voie radicalaire, **caractérisés en ce qu'**on transforme les polyesters hyperramifiés selon l'une quelconque des revendications précédentes avec au moins un composé qui porte au moins un groupe réactif par rapport aux groupes carboxy et exactement un groupe polymérisable par voie radicalaire.

23. Polyesters hyperramifiés polymérisables par voie radicalaire selon la revendication 22, **caractérisés en ce que** le groupe polymérisable par voie radicalaire est choisi dans le groupe constitué par les groupes allyle, méthallyle, vinyléther, acryle, méthacryle et 2-phényléthen-1-yle (styrène).

24. Polyesters hyperramifiés polymérisables par voie radicalaire selon la revendication 22, **caractérisés en ce qu'**il s'agit, pour le composé qui porte au moins un groupe réactif par rapport aux groupes carboxyle et exactement un groupe polymérisable par voie radicalaire, du groupe de transformation formel d'épichlorhydrine (1-chloro-2,3-époxypropane) avec un composé qui contient exactement un groupe polymérisable par voie radicalaire et au moins une fonction acide.

25. Polyesters hyperramifiés polymérisables par voie radicalaire selon la revendication 24, **caractérisés en ce qu'**il s'agit, pour le composé qui contient exactement un groupe polymérisable par voie radicalaire et au moins une fonction acide, d'acide acrylique, d'acide méthacrylique, d'acide éthacrylique, d'acide α-chloroacrylique, d'acide crotonique, d'acide maléique, d'acide fumarique, d'acide itaconique, d'acide citraconique, d'acide mésaconique, d'acide glutaconique, d'acide aconitique, d'acide vinylsulfonique, d'acide vinylphosphonique, d'acide allylsulfonique, d'acrylate de sulfoéthyle, de méthacrylate de sulfoéthyle, d'acrylate de 2-sulfopropyle ou de 3-sulfopropyle, de méthacrylate de 2-sulfopropyle ou de 3-sulfopropyle, d'acide 2-hydroxy-3-acryloxypropylsulfonique, d'acide 2-hydroxy-3-méthacryloxypropylsulfonique, d'acide allylphosphonique, d'acide styrènesulfonique, d'acide cinnamique, d'acide 2-acrylamido-2-méthylpropanesulfonique ou d'acide 2-acrylamido-2-méthylpropanephosphonique, ainsi que de leurs amides, leurs esters hydroxyalkyliques et leurs esters et amides contenant des groupes amino ou ammonium et, dans le cas des acides multiples, des composés partiellement estérifiés qui présentent encore au moins un groupe carboxy.

26. Polyesters hyperramifiés polymérisables par voie radicalaire selon la revendication 22, **caractérisés en ce qu'**il s'agit, pour le composé qui porte au moins un groupe réactif par rapport aux groupes carboxy et exactement un groupe polymérisable par voie radicalaire, d'allylglycidyléther, de vinylglycidyléther, d'acrylate de glycidyle ou de méthacrylate de glycidyle.

27. Procédé pour la préparation de polyesters hyperramifiés polymérisables par voie radicalaire selon l'une quelconque des revendications 22 ou 26, **caractérisé en ce qu'**on transforme au moins un polyester hyperramifié selon l'une quelconque des revendications 1 à 19 avec au moins un composé qui porte au moins un groupe réactif par rapport aux groupes carboxy et exactement un groupe polymérisable par voie radicalaire.

28. Utilisation de polyesters hautement fonctionnels, hautement ramifiés, hyperramifiés, polymérisables par voie radicalaire selon l'une quelconque des revendications 22 à 26 comme monomère ou comonomère dans la polymérisation par voie radicalaire.

29. Utilisation de polymères ou de copolymères obtenus à partir d'une (co)polymérisation, qui contiennent des polyesters hautement fonctionnels, hautement ramifiés, hyperramifiés, polymérisables par voie radicalaire selon l'une quelconque des revendications 22 à 26 comme monomère ou comonomère sous forme copolymérisée dans des systèmes de laque.
